# EUROPÄISCHE PATENTANMELDUNG

(11) **EP 0 940 614 A2**
(43) Veröffentlichungstag der Anmeldung: **08.09.1999**
(21) Anmeldenummer: 99104412.4
(22) Anmeldetag: 05.03.1999
(51) Int. Cl.: F16L 1/11

(54) **Trassenband**

(30) Priorität: 06.03.1998 DE 29803773 U
(71) Anmelder: multicoll Werth GmbH, 42897 Remscheid (DE)
(72) Erfinder: Werth, Helga, 42897 Remscheid (DE)
(74) Vertreter: Füssel, Michael

(57) **Zusammenfassung**

Um ein Trassenband (1) aus Kunststoff zur Verlegung in der Erde zur Warnung vor dem Vorhandensein erdverlegter Kabel oder Rohrleitungen, mit zwei übereinander liegenden Folienstreifen (2,3) von denen zumindest einer aus transparentem Material besteht, wobei beide Folienstreifen (2,3) in Längsrichtung (4) über streifenförmige Verbindungszonen (6) derart miteinander verbunden sind, daß zwischen den Verbindungszonen (6) Längstaschen (7) verbleiben, in welche farbiges Kunststoffband (8) eingezogen ist, so zu verbessern, daß unter Erhalt der wesentlichen Eigenschaften die Gefahr unkontrollierter Schrumpfung vermieden wird, soll das Kunststoffband einstückig durchgehend ausgebildet und die streifenförmigen Verbindungszonen (6) in Längsrichtung (4) sowie in Querrichtung (5) praktisch durchgehend glatt, kräuselfrei sowie frei von Inhomogenitäten und Fehlstellen sein, und zumindest einer der Folienstreifen (2;3) nicht transparent, sondern aus signalfarbigem Material bestehen, und entlang der streifenförmigen Verbindungszonen (6) die Oberseite (12) eines der Folienstreifen (=Trägerfolie (3)) unmittelbar mit der Unterseite (14) des anderen Folienstreifens (=Deckfolie (2)) ununterbrochen über die gesamte Länge (16) des Trassenbandes (1) verbunden sein.

## Beschreibung

Die Erfindung bezieht sich auf ein Trassenband nach Oberbegriff von Anspruch 1.

Solch ein Trassenband wird oberhalb von erdverlegten Kabeln oder Rohrleitungen im Erdreich verlegt, so daß es bei Aushebung von Erdreich mittels Maschinen vor Angriff des Kabels/der Rohrleitung aufgegriffen und ausgehoben wird. Bei durchgängiger Verlegung wird das Trassenband durch die im Erdreich verbleibenden Abschnitte gehalten und reißt. Die abgerissenen Abschnitte sollen sichtbar sein. Zu diesem Zweck ist das Trassenband mehrschichtig aufgebaut. Die beiden Schichten sind über streifenförmige Verbindungszonen so miteinander verbunden, daß zwischen den Verbindungszonen Längstaschen freibleiben.

Damit das Trassenband für den Maschinenführer auch nach dem Reißen sichtbar wird, ist farbiges Kunststoffband in die Längstaschen des Trassenbandes eingezogen.

Bei einem bekannten Trassenband wird die streifenförmige Verbindungszone dadurch hergestellt, daß Träger- und Deckfolie zusammen mit einem dazwischen angeordneten, dünnen Kunststoffstreifen als Kontaktvermittler verschweißt werden. Dadurch entsteht die Gefahr der unkontrollierten Schrumpfung. Das Trassenband ist dann insbesondere an den streifenförmigen Verbindungszonen verzogen.

Beim Verschweißen mittels zwischengelegter, schmaler und dünner Kunststoffstreifen kann sich das Material offenbar so verziehen, daß sich Aufwerfungen und Wellenstrukturen ausbilden. Neben einer entsprechenden Prozeßführung ist es deshalb auch erforderlich, daß die zwischengelegten Kunststoffstreifen vergleichbare thermische Eigenschaften (Schmelzpunkt, thermische Ausdehnung) haben, wie die darunter- und darüberliegenden Folien.

Da erdverlegte Rohre bzw. Kabel eine lange Lebensdauer haben, sind an die Dauereigenschaften von Trassenbändern entsprechend hohe Anforderungen zu stellen. Solche Trassenbänder müssen ihre wesentlichen Warneigenschaften auch noch nach 20 Jahren Aufenthaltsdauer und mehr unter der Erde bewahrt haben.

Es ist Aufgabe der vorliegenden Erfindung, ein Trassenband der eingangs genannten Art so zu verbessern, daß die oben genannten Nachteile vermieden werden.

Diese Aufgabe wird gelöst durch die Merkmale des Anspruchs 1.

Erfindungswesentlich sind die streifenförmigen Verbindungszonen in Längs- sowie in Querrichtung praktisch durchgehend glatt, kräuselfrei und frei von Inhomogenitäten und Fehlstellen. Damit ist das Trassenband ober- und unterseitig und sogar im Bereich der Verbindungszonen sowie im Bereich der Längstaschen durchgängig glatt. Dies wird dadurch gefördert, daß die Oberseite der Trägerfolie unmittelbar mit der Unterseite der Deckfolie entlang der streifenförmigen Verbindungszonen verbunden ist.

Selbst bei Verschweißen der Folien der vorliegenden Erfindung sorgt der unmittelbare Kontakt der Folien, die vorzugsweise aus gleichem Material bestehen, für eine glatte und kräuselfreie Oberfläche.

Erfindungsgemäß wird die Warnwirkung des Trassenbandes dadurch verstärkt, daß einer der Folienstreifen nicht transparent, sondern aus signalfarbigem Material ist. Die Warnwirkung beruht nämlich auch darauf, daß das Trassenband wenigstens abschnittsweise besonders auffällig gestaltet ist. Ein durchgehend signalfarbiges Material, welches mit einer transparenten Deckfolie "abgedeckt" wird, ist von allen Seiten der Folie her durch die Signal farbe auffällig. Ein Trassenband kann beispielsweise lediglich aus der transparenten Folie, welche im allgemeinen die Deckfolie sein wird, sowie der nicht transparenten, signalfarbigen Trägerfolie bestehen. Dann sind von der Seite der transparenten Deckfolie her sowohl die eingezogenen Kunststoffstreifen als auch die nicht transparente signalfarbige Trägerfolie voll zu sehen, so daß sich die Warnwirkung entfalten kann. Von der gegenüberliegenden Seite aus ist die nicht transparente Trägerfolie unverdeckt und vollständig zu sehen.

Insgesamt bietet die Erfindung ein Trassenband mit zuverlässiger Warnwirkung auch deshalb, da die Kunststoffbänder aufgrund der durchgehend glatten und homogenen Struktur der Längstaschen ohne abzureißen mit der festgeschriebenen Länge ausgezogen werden können und da zusätzlich einer der Folienstreifen auch aus signalfarbigem Material besteht. Es kommen hauptsächlich Materialien zur Anwendung, die auch bei Nässe, Wärme oder extremer Kälte, sowie unter dem Angriff von Säuren und/oder Basen sowie Belastung mit Bakterien etc. dauerhaft beständig sind. Das Material der Folien und die Verbindung zwischen den Folien ist dabei unter den genannten Umständen vorzugsweise über die Lebensdauer eines verlegten Rohres/Kabels beständig.

Bevorzugte Ausgestaltungen der Erfindung sind durch die Unteransprüche gegeben.

Die Erfindung wird im folgenden anhand von in den Zeichnungen dargestellten Ausführungsbeispielen näher erläutert. Es zeigen:
- Fig.1.: eine Draufsicht auf ein erfindungsgemässes, innenseitig bedrucktes Trassenband,
- Fig.2: eine Explosionsdarstellung im Querschnitt durch das Trassenband der Fig.1,
- Fig.3: einen Querschnitt durch das zusammengefügte Trassenband der Fig.2,
- Fig.4: eine Draufsicht auf ein erfindungsgemäßes Trassenband, wobei die Deckfolie weggelassen und die Längstaschen durch Unterbrechung der Schraffur angedeutet sind,
- Fig.5: ein weiteres Ausführungsbeispiel der Erfindung.

Soweit im folgenden nichts anderes gesagt ist, gilt die nachfolgende Beschreibung für alle Figuren.

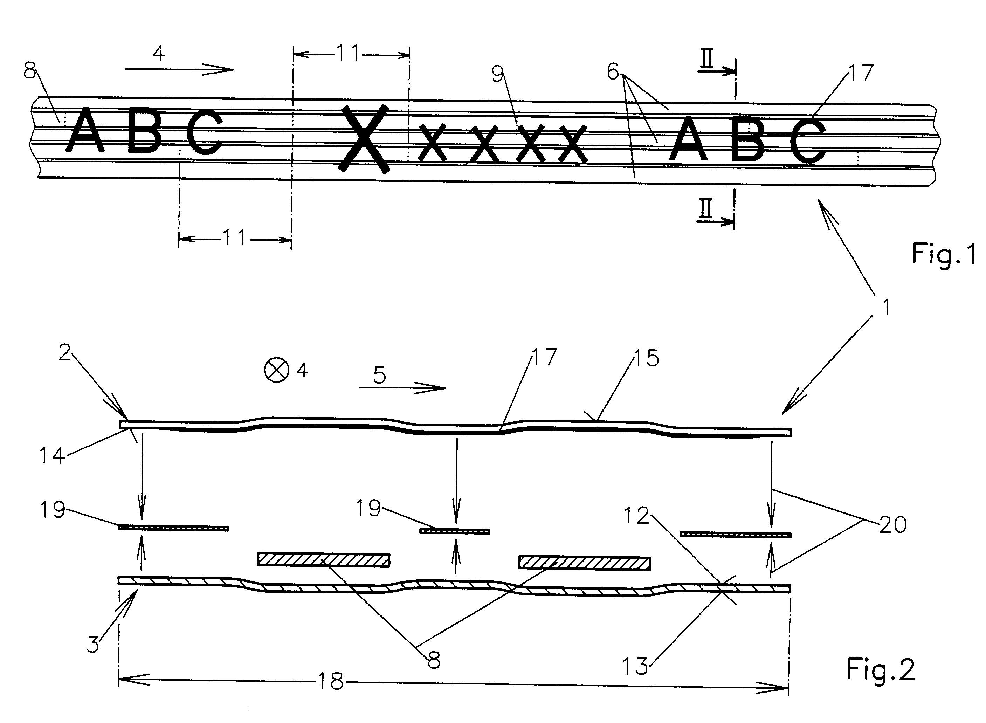

Fig.1 zeigt eine Draufsicht auf den Längsabschnitt eines Trassenbandes 1. Es besteht aus einer untenliegenden Trägerfolie 3 und einer obenliegenden Deckfolie 2. Die Deckfolie 2 ist transparent und auf ihrer Innenseite bedruckt. Die Buchstaben sind so groß, daß ein Baggerführer, wenn die Baggerschaufel das Trassenband 1 aufgegriffen hat, sofort erkennen kann, welche Art von Kabel, Rohrleitung oder dergleichen unterhalb des Trassenbandes 1 verlegt ist.

Die beiden Folienstreifen (Deckfolie 2 und Trägerfolie 3) sind über streifenförmige Verbindungszonen 6 ununterbrochen über die gesamte Länge 16 des Trassenbandes 1 unmittelbar miteinander verbunden. Die streifenförmigen Verbindungszonen 6 sind durchgehend glatt, kräuselfrei und homogen. Der Drucktext 17 ist auch im Bereich der streifenförmigen Verbindungszonen 6 unverdeckt und unverzerrt sichtbar.

Zwischen den streifenförmigen Verbindungszonen 6 sind die Folienstreifen 2,3 verbindungslos. Diese verbindungslosen Querzonen bilden die Längstaschen 7. Mehrere Längstaschen 7 sind in Querrichtung 5 benachbart. In diese Längstaschen 7 sind Abschnitte aus farbigem Kunststoffband 8 eingezogen. Die Kunststoffbänder 8 weisen quer verlaufende Schwächungslinien 9,10 (Quetschlinien, Perforationslinien oder dergleichen) auf. Auf diese Weise werden Abschnitte im Kunstsoffband 8 gebildet, ohne das Band zu durchtrennen. Die Schwächungslinien 9,10 jeweils benachbarter Abschnitte einer der Längstaschen 7 liegen um einen festgeschriebenen Mindestabstand 11 neben den Schwächungslinien 9,10 benachbarter Abschnitte der in Querrichtung 5 benachbarten Längstasche 7.

Die eingezogenen Kunststoffbänder 8 sind von durchgehenden Längen. Die Kunststoffbänder 8 einer Längstasche 7 liegen zu den Kunststoffbändern 8 der benachbarten Längstasche 7 so, daß die Schwächungslinien 9,10 von den in Querrichtung 5 benachbarten Kunststoffbändern 8 um einen festgeschriebenen Mindestabstand 11 in Längsrichtung 4 gegeneinander verschoben sind. Hierzu sind vorzugsweise alle Abschnitte des eingezogenen Kunststoffbandes 8 von gleicher Länge. Bei Reißen des Trassenbandes 1 durch die Schaufelbewegung kann gegebenenfalls eines der Kunststoffbänder 8 vorprogrammiert reißen und das entstehende Ende durch die Schaufel aus einer der Längstaschen 7 des Trassenbandes 1 herausgezogen werden, damit dieses dem Maschinenführer sichtbar wird. Hierzu ist der Mindestabstand 11 festgeschrieben.

Fig.2 zeigt einen Querschnitt durch das Trassenband 1 der Fig. 1 in Richtung der Pfeile II aus Fig.1. In der Explosionsdarstellung der Fig.2 ist das Trassenband in seine Bestandteile zerlegt dargestellt. Es besteht aus den zwei übereinanderliegenden Folienstreifen 2,3. Der obere Folienstreifen ist die Deckfolie 2 und der untere Folienstreifen die Trägerfolie 3. Die Deckfolie 2 besteht aus einem transparenten Material. Dies könnte beispielsweise nicht gefärbtes Polyethylen oder Polyether sein. Die Deckfolie aus transparentem Material ist an ihrer Unterseite 14, also an ihrer Innenseite, bedruckt. Hierzu ist die Druckschrift 17 in der Fig. 2 durch eine übertrieben dick dargestellte, schwarze Schicht gezeigt. Selbstverständlich kann der Druck auch an anderer Stelle der Deckfolie 2, beispielsweise auf deren Oberseite 15, aufgebracht sein. Dann kann auch nach dem Verkleben der beiden Folienstreifen 2,3 der Druck aufgebracht werden. Für die Aufbringung des Druckes kommt prinzipiell jede Seite 12,13,14,15 der beiden Folienstreifen in Betracht.

Bei Anbringung des Drucktextes 17 an der Oberseite 12 der Trägerfolie 3 oder an der Unterseite 14 der Deckfolie 2 bietet sich der Vorteil, daß der Drucktext zwischen den Folien weitgehend vor Umwelteinflüssen wie Feuchtigkeit, chemischer Angriff, biologischer Einwirkung etc. geschützt angeordnet ist. Dadurch wird eine längere Dauerhaltbarkeit auch des Drucktextes 17 gewährleistet. Besonders bevorzugt ist die Anbringung des Drucktextes 17 an der Unterseite 14 der Deckfolie 2. Dort ist der gesamte Drucktext unverdeckt zu sehen, da die Deckfolie 2 transparent ist und der Drucktext 17 nicht von Klebeschichten oder Kunststoffbändern 8 verdeckt ist.

Das Material des nicht transparenten Folienstreifens -im Ausführungsbeispiel der Fig.2 der Trägerfolie 3- ist in der Signalfarbe durchgefärbt. Es ist bevorzugt mit einem bleifreien Masterbatch durchgefärbt. Dadurch ist die Farbe ebenfalls besonders verrottungsfest, da zur Zerstörung der Färbung das gesamte Material zerstört werden müßte. Durch das bleifreie Masterbatch wird die Umweltverträglichkeit einer solchen Trägerfolie 3 gewährleistet. Das Masterbatch ist auch frei von anderen Schwermetallen oder üblichen, umweltgiftigen Zusatzstoffen, die bei der Produktion wegfallen können.

Einer der Folienstreifen 2,3 besteht oder beide Folienstreifen 2,3 bestehen aus hochdichtem (HD) oder niedrigdichtem (LD) Polyethylen oder Polyether. Durch entsprechende Auswahl aus den oben genannten Materialien können Trassenbänder mit den gewünschten Eigenschaften, beispielsweise hinsichtlich der Festigkeit, Steifigkeit und Dicke zusammengestellt werden. Hierbei können Deckfolie 2 und Trägerfolie 3 aus unterschiedlichen Materialien bestehen. Bevorzugt ist jedoch, daß beide Folien aus dem gleichen Material bestehen. Dann sind insbesondere die thermischen Eigenschaften der beiden Folienstreifen 2,3 identisch, so daß bei thermischer Behandlung, beispielsweise Verschweißen, die Folienstreifen 2,3 sich konform verhalten. Dies führt zu einer homogeneren Ausbildung des Trassenbandes bei thermischer oder sonstiger Verarbeitung.

In dem gezeigten Ausführungsbeispiel ist der nicht transparente Folienstreifen -die Trägerfolie 3- nicht bedruckt. Vielmehr ist ausschließlich die Deckfolie 2 an ihrer Unterseite 14 bedruckt, was die bereits oben erwähnten Vorteile hat. Insbesondere wird der Druck nicht durch Kleber oder Kunststoffstreifen verdeckt.

Die Unterseite 13 der Deckfolie 3 sowie die Oberseite 15 der Trägerfolie 2 sind Oberflächen. Insbesondere diese Oberflächen 13,15 sind dem Angriff von Umwelteinflüssen, wie beispielsweise chemischen Einwirkungen oder dem Angriff von Mikroorganismen ausgesetzt. Daher sind diese Oberflächen 13,15 im allgemeinen nicht bedruckt und aus dem beständigen Material der Folienstreifen 2,3.

Zwischen den Folienstreifen 2,3 sind - ebenfalls in Explosionsdarstellung - die farbigen Kunststoffbänder 8 gezeigt. Es sind zwei Kunststoffbänder 8 vorhanden. Diese sind mit Abstand zueinander und in Querrichtung 5 benachbart angeordnet. Beide Kunststoffbänder 8 sind ebenfalls benachbart vom Rand des Trassenbandes 1 angeordnet. Das Kunststoffband 8 hat eine größere Dicke als die Folienstreifen 2 und 3. Wenn das Kunststoffband aus dem gleichen Material wie die Folienstreifen 2 und 3 besteht, ist es somit von großer Reißfestigkeit. Das Kunststoffband soll aber nicht nur reißfest, sondern auch biegesteif sein, um nach einem Aufgriff mit der Baggerschaufel nach Möglichkeit aus dem Erdaushub / dem Erdreich warnend herauszuschauen. Es hat ebenfalls einen rechteckförmigen Querschnitt und ist in Längsrichtung 4 von geringerer Erstreckung als die Folienstreifen 2,3.

Die erhöhte Reißfestigkeit des farbigen Kunststoffbands 8 in Verbindung mit der abschnittsweisen Verlegung zwischen den Folienstreifen 2,3 gewährleistet, daß beim Ausheben eines Trassenbandes 1 mittels eines Baggers die Folienstreifen 2,3 reißen, während die Kunststoffbänder 8 unversehrt bleiben.

Zum Verbinden der Deckfolie 2 mit der Trägerfolie 3 ist zwischen den beiden Folienstreifen ein streifenförmig verlaufendes Klebemittel 19 vorgesehen. Das Klebemittel 19 ist auch randseitig am Trassenband 1 vorhanden. Das Klebemittel 19 ist vorzugsweise ein Polyurethan-Kleber. Dieser besitzt eine hervorragende Haftung, da er mit dem Feuchtigkeitsfilm der Oberfläche reagiert. Dies ist für ein erfindungsgemässes Trassenband 1, welches unter der Erde verlegt ist, von besonderem Vorteil. Bei Untererdverlegung ist ein entsprechendes Trassenband 1 nämlich stets einem gewissen Feuchtigkeitsangriff ausgesetzt. Dieser Feuchtigkeitsangriff vermag dann die Klebeschicht nicht zu lösen, sondern würde eher zur Verstärkung der Haftung beitragen. Des weiteren dampft ein Polyurethan-Kleber nicht ab. Er vernetzt vielmehr ohne das Abdampfen von beispielsweise Lösungsmitteln.

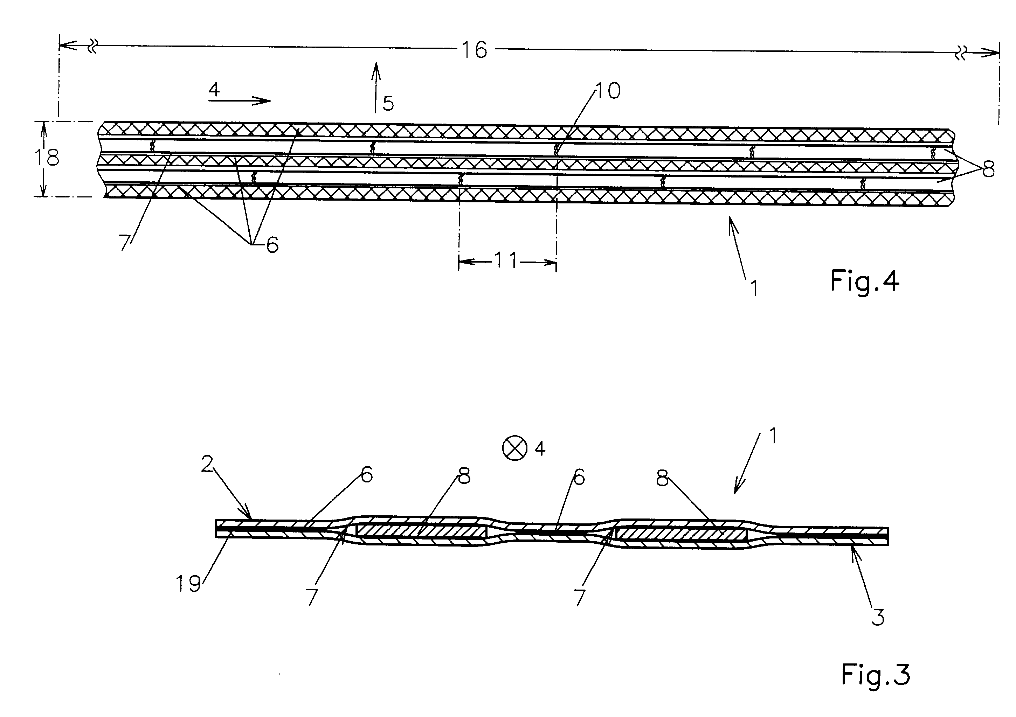

Wenn die Trägerfolie 3 mit der Deckfolie 2 durch Aufkaschieren in der Kaschierrichtung 20 mittels Klebemittel verbunden ist, stellt sich der Querschnitt der Fig.2 wie in Fig.3 gezeigt dar. Statt des Verklebens können die Folienstreifen 2,3 auch verschweißt sein. Das Verschweißen erfolgt dann in der gleichen Richtung und ebenfalls streifenförmig, sowie die Verklebung. Soweit gilt das im folgenden gesagte auch für die Verschweißung. Dabei ist bei der Verschweißung zu beachten, daß die Materialien der Folienstreifen 2,3 vorzugsweise gleiche thermische Eigenschaften haben und auch bevorzugt im wesentlichen aus gleichem Material bestehen.

Das Trassenband 1, welches in Fig.3 im Querschnitt gezeigt ist, ist ein lediglich an den Enden offenes Folienpaket, aufgebaut aus den beiden Folienstreifen 2,3. Diese sind in Längsrichtung 4 über streifenförmige Verbindungszonen 6 konstanter Breite miteinander verbunden. Die aufrollweiche Verbindung wird im gezeigten Ausführungsbeispiel durch das biegeelastisch bleibende Klebemittel 19 bewirkt. Zwischen den Verbindungszonen 6 sind Längstaschen 7. In diese Längstaschen 7 sind die farbigen Kunststoffbänder 8 eingezogen. Die Folienstreifen 2,3 können auch unmittelbar miteinander verschweißt sein. Bei ähnlichen, thermischen Eigenschaften der Folienstreifen 2,3 hat das den Vorteil, daß bei Verschweißung sich die Folienstreifen 2,3 nicht oder nur unwesentlich verziehen, da sie gleiche Schmelzpunkte und thermische Ausdehnungen haben. Insbesondere ist kein Material mit unterschiedlichen Eigenschaften an den Verschweißungsstellen zwischen die Folienstreifen eingelegt, so daß sich beim Aufrollen des Trassenbandes 1 das aufrollweiche Verhalten einstellt.

Fig.4 zeigt das erfindungsgemäße Trassenband in Draufsicht. Die Deckfolie 2 ist transparent und daher hier nicht zu sehen. Die Trägerfolie 3 ist durch Schraffur dargestellt und im Bereich der Längstaschen 7 weggelassen. In dieser Darstellung ist zu sehen, daß die Deckfolie 2 mit der Trägerfolie 3 in Längsrichtung 4 über streifenförmige Verbindungszonen 6 miteinander verbunden ist. Zwischen den Verbindungszonen 6 verbleiben die Längstaschen 7. In die Längstaschen 7 sind die farbigen Kunststoffbänder 8 so eingezogen, daß deren Schwächungslinien 9,10 jeweils benachbarter Abschnitte einer Längstasche 7 um einen festgeschriebenen Mindestabstand 11 in Längsrichtung 4 neben den Schwächungslinien 9,10 benachbarter Abschnitte der in Querrichtung 5 benachbarten Längstasche 7 liegen. Die streifenförmigen Verbindungszonen 6 sind in Längs- sowie in Querrichtung 5 praktisch durchgehend glatt, kräuselfrei und frei von Inhomogeniäten und Fehlstellen. Dies ist bei der gezeigten Verklebung und auch bei Verschweißen gleichartiger Materialien (s.o.) erfüllt. Die Trägerfolie 3 und auch die Deckfolie 2 sind über die gesamte Länge 16 des Trassenbandes 1 frei von Sollbruchstellen. Der gewünschte Warneffekt des Auszugs des farbigen Kunststoffbandes 8 ist bereits ohne jegliche Sollbruchstelle gegeben. Dazu ist der festgeschriebene Mindestabstand 11 zumindest so groß, daß beim Ausziehen des Trassenbandes 1 mit einer Baggerschaufel bis zum Reißen stets ein so weiter Auszug zumindest eines der Kunststoffbänder 8 gewährleistet ist, daß das ausgezogene Ende vom Führerhaus des Baggers aus sichtbar wird. Hierzu ist der festgeschriebene Mindestabstand 11 vorzugsweise größer als die Breite einer Baggerschaufel. Die Folienstreifen 2,3 sind ununterbrochen über die gesamte Länge 16 des Trassenbands 1 verbunden.

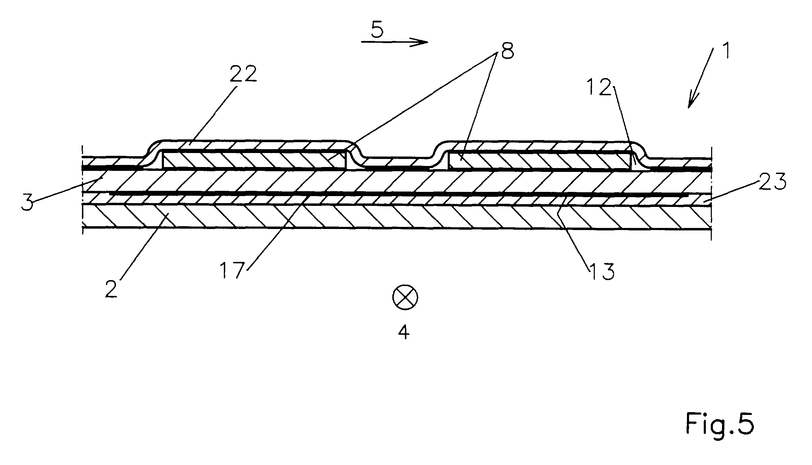

Fig. 5 zeigt einen Querschnitt durch ein Trassenband 1 mit drei Folienstreifen 2,3,22. Von den beiden Folienstreifen 2,3 weist derjenige aus signalfarbigem Material, im gezeigten Ausführungsbeispiel die Trägerfolie 3, auf seiner Oberseite 12 eine transparente Folie 22 mit den Längstaschen 7 auf. Auf ihrer Unterseite 13 hat die Trägerfolie 3 eine ebenfalls transparente Deckfolie 2. Trägerfolie 3 und transparente Deckfolie 2 sind hier über die Klebeschicht 23 vollflächig durch Verklebung verbunden. Die Trägerfolie 3 ist an ihrer Unterseite 13 mit dem Drucktext 17 bedruckt. Oberseite 12 und Unterseite 13 können in einem anderen Ausführungsbeispiel auch vertauscht sein. Beide transparenten Folien 2,22 sind auf die Trägerfolie 3 aufkaschiert. Die in den Längstaschen 7 sitzenden Kunststoffbänder 8 sind an der der bedruckten Unterseite 13 gegenüberliegenden Oberseite 12 der Trägerfolie 3 angeordnet. Sie verdecken daher auch nicht den Drucktext 17.

### Bezugszeichenliste:

- 1: Trassenband
- 2: Deckfolie
- 3: Trägerfolie
- 4: Längsrichtung
- 5: Querrichtung
- 6: streifenförmige Verbindungszone
- 7: Längstasche
- 8: farbiges Kunststoffband
- 9: Schwächungslinie
- 10: Schwächungslinie
- 11: Abstand der Schwächungslinien
- 12: Oberseite der Trägerfolie
- 13: Unterseite der Trägerfolie
- 14: Unterseite der Deckfolie
- 15: Oberseite der Deckfolie
- 16: Länge des Trassenbandes
- 17: Drucktext
- 18: Breite des Trassenbandes
- 19: Klebemittel
- 20: Kaschierrichtung
- 22: transparente Folie
- 23: Klebeschicht

## Patentansprüche

1. Trassenband (1) aus Kunststoff zur Verlegung in der Erde zur Warnung vor dem Vorhandensein erdverlegter Kabel oder Rohrleitungen, mit zwei übereinander liegenden Folienstreifen (2,3) von denen zumindest einer aus transparentem Material besteht, wobei beide Folienstreifen (2,3) in Längsrichtung (4) über streifenförmige Verbindungszonen (6) derart miteinander verbunden sind, daß zwischen den Verbindungszonen (6) Längstaschen (7) verbleiben, in welche farbiges Kunststoffband (8) eingezogen ist, **dadurch gekennzeichnet**, daß das Kunststoffband einstückig durchgehend ausgebildet ist, daß die streifenförmigen Verbindungszonen (6) in Längsrichtung (4) sowie in Querrichtung (5) praktisch durchgehend glatt, kräuselfrei sowie frei von Inhomogenitäten und Fehlstellen sind, und daß zumindest einer der Folienstreifen (2;3) nicht transparent, sondern aus signalfarbigem Material ist, und daß entlang der streifenförmigen Verbindungszonen (6) die Oberseite (12) eines der Folienstreifen (=Trägerfolie (3)) unmittelbar mit der Unterseite (14) des anderen Folienstreifens (=Deckfolie (2)) ununterbrochen über die gesamte Länge (16) des Trassenbandes (1) verbunden ist.

2. Trassenband nach Anspruch 1, **dadurch gekennzeichnet,** daß die Trägerfolie (3) über die gesamte Länge (16) des Trassenbandes (1) frei von Sollbruchstellen ist.

3. Trassenband nach Anspruch 1 oder 2, **dadurch gekennzeichnet**, daß die Reißfestigkeit des farbigen Kunststoffbandes (8) größer als die Reißfestigkeit der verbundenen Folienstreifen (2,3) ist.

4. Trassenband nach Anspruch 3, **dadurch gekennzeichnet**, daß die übereinander liegenden Folienstreifen (2,3) entlang der streifenförmigen Verbindungszonen (6) miteinander verklebt sind.

5. Trassenband nach Anspruch 4, **dadurch gekennzeichnet**, daß die übereinander liegenden Folienstreifen (2,3) mit einem Polyurethan-Kleber (19) verklebt sind, der ohne Abdampfen vernetzt und durch Luftfeuchtigkeit haftet.

6. Trassenband nach einem der Ansprüche 1 bis 5, **dadurch gekennzeichnet**, daß die Deckfolie (2) aus transparentem Material besteht und auf der Innenseite bedruckt ist.

7. Trassenband nach Anspruch 6, **dadurch gekennzeichnet**, daß der nicht transparente Folienstreifen (3) nicht bedruckt ist.

8. Trassenband nach einem der Ansprüche 1 bis 7, **dadurch gekennzeichnet**, daß das Material des nicht transparenten Folienstreifens (3) in der Signalfarbe durchgefärbt ist.

9. Trassenband nach einem der Ansprüche 1 bis 8, **dadurch gekennzeichnet**, daß die Folienstreifen (2,3) aus hochdichtem oder niedrigdichtem Polyethylen bestehen.

10. Trassenband nach einem der Ansprüche 1 bis 9, **dadurch gekennzeichnet**, daß die Folienstreifen (2,3) streifenförmig unmittelbar miteinander verschweißt sind.

11. Trassenband nach einem der Ansprüche 1 bis 10, **dadurch gekennzeichnet**, daß das Trassenband (1) lediglich aus den Folienstreifen (2,3) besteht.

12. Trassenband nach einem der Ansprüche 1 bis 10, **dadurch gekennzeichnet**, daß von den beiden Folienstreifen (2,3) derjenige aus signalfarbigem Material auf seiner Oberseite (12) eine transparente Folie (22) mit den Längstaschen (7) aufweist, auf seiner Unterseite (13) bedruckt ist und dort eine ebenfalls transparente Folie (2) aufweist.

13. Trassenband nach einem der Ansprüche 1 bis 12, **dadurch gekennzeichnet**, daß das Kunststoffband (8) quer zu seiner Längsrichtung (4) Schwächungslinien (9,10) aufweist, zwischen denen sich ungeschwächte Abschnitte von Kunststoffband (8) erstrecken.

14. Trassenband nach Anspruch 13, **dadurch gekennzeichnet**, daß die Schwächungslinien (9,10) jeweils benachbarter Abschnitte einer der Längstaschen (7) um einen festgeschriebenen Mindestabstand (11) neben den Schwächungslinien (9,10) benachbarter Abschnitte der in Querrichtung (5) benachbarten Längstasche (7) liegen.
